# EUROPÄISCHE PATENTANMELDUNG

(11) **EP 3 636 894 A1**
(43) Veröffentlichungstag der Anmeldung: **15.04.2020**
(21) Anmeldenummer: 19192277.2
(22) Anmeldetag: 19.08.2019
(51) Int. Cl.: F02B 37/18, F02B 37/24, F02D 41/00, F02D 41/14

(54) **VERFAHREN ZUR LADEDRUCKREGELUNG EINER VERBRENNUNGSKRAFTMASCHINE**

(30) Priorität: 08.10.2018 DE 102018217117
(71) Anmelder: Volkswagen AG, 38440 Wolfsburg (DE)
(72) Erfinder: Shurkewitsch, Andre, 38547 Calberlah (DE); Petersen, Lars, 38536 Meinersen (DE); Dr. Millich, Elmar, 10999 Berlin (DE); Wetten, Robert, 10717 Berlin (DE)

(57) **Zusammenfassung**

Verfahren zur Ladedruckregelung einer Verbrennungskraftmaschine (1), die Bestandteil eines Antriebsstranges (2) ist, wobei der Antriebsstrang (2) zumindest die Verbrennungskraftmaschine (1), eine Saugleitung (3), eine Abgasleitung (4) und einen Abgasturbolader (5) aufweist; wobei die Verbrennungskraftmaschine (1) mindestens ein die Saugleitung (3) mit einer Brennkammer (6) der Verbrennungskraftmaschine (1) fluidtechnisch verbindendes Einlassventil (7) und mindestens ein die Brennkammer (6) mit einem ersten Abschnitt (8) der Abgasleitung (4) fluidtechnisch verbindendes Auslassventil (9) aufweist; wobei die Abgasleitung (4) zwischen der Brennkammer (6) und dem Abgasturbolader (5) den ersten Abschnitt (8) und stromabwärts des Abgasturboladers (5) einen zweiten Abschnitt (10) aufweist; wobei der Abgasturbolader (5) und/oder ein den Abgasturbolader umgehender Bypass (33) verstellbar ist; wobei bei dem Verfahren ein Öffnungszeitpunkt (17) des mindestens einen Einlassventils (7) und ein Schließzeitpunkt (18) des mindestens einen Auslassventils (9) berücksichtigt wird.

## Beschreibung

Die Erfindung betrifft ein Verfahren zur Ladedruckregelung einer Verbrennungskraftmaschine. Die Verbrennungskraftmaschine ist insbesondere Bestandteil eines Antriebsstranges, wobei der Antriebsstrang zumindest die Verbrennungskraftmaschine, eine Saugleitung, eine Abgasleitung und einen Abgasturbolader aufweist. Der Abgasturbolader ist insbesondere ein VTG-Abgasturbolader mit variabler Einstellung der Turbinengeometrie (VTG: *"variable turbine geometry*")*.*

Aus den Dokumenten DE 10 2008 063 935 A1, DE 10 2013 223 900 A1 und DE 10 2015 216 261 A1 sind jeweils Verfahren zur Ansteuerung eines VTG-Abgasturboladers bekannt, durch die in Abhängigkeit von einem Betriebspunkt einer Verbrennungskraftmaschine eine optimale Stellung des Abgasturboladers ermittelt werden sollen. Die optimale Stellung des Abgasturboladers soll die Bereitstellung einer möglichst maximalen Turbinenleistung des Abgasturboladers ermöglichen.

Es hat sich nun gezeigt, dass gerade bei modernen Verbrennungsmotoren bei bestimmten Betriebspunkten nur ein verlangsamter und/oder auch unharmonischer Ladedruck- bzw. Drehmomentenaufbau realisiert werden kann. Weiter kann es vorkommen, dass sich die Verbrennungskraftmaschine durch einen zu hoch eingestellten Abgasgegendruck (wenn der Abgasturbolader einen nur geringen Durchströmungsquerschnitt aufweist) selber "abwürgt", so dass das angeforderte Drehmoment nicht erreicht werden kann.

Aus diesem Grund wird ein maximales Tastverhältnis des Abgasturboladers begrenzt (also der Durchströmungsquerschnitt wird nicht auf ein Minimum reduziert), so dass das Erreichen eines zu hohen Abgasgegendrucks (in einem Abschnitt der Abgasleitung zwischen Verbrennungskraftmaschine und Abgasturbolader) in jedem Fall verhindert wird.

Die Begrenzung des Tastverhältnisses hat aber zur Folge, dass der Ladedruck- und der Drehmomentaufbau nur verlangsamt erfolgt bzw. nicht optimal schnell erfolgt.

Aufgabe der vorliegenden Erfindung ist es, die mit Bezug auf den Stand der Technik angeführten Probleme zumindest teilweise zu lösen. Insbesondere soll ein Verfahren zur Ladedruckregelung einer Verbrennungskraftmaschine vorgeschlagen werden, durch das ein Ladedruck- und/oder Drehmomentaufbau so schnell wie möglich erfolgen kann.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zur Ladedruckregelung einer Verbrennungskraftmaschine vorgeschlagen, wobei die Verbrennungskraftmaschine Bestandteil eines Antriebsstranges ist. Der Antriebsstrang weist zumindest die Verbrennungskraftmaschine, eine Saugleitung, eine Abgasleitung und einen Abgasturbolader auf. Die Verbrennungskraftmaschine weist mindestens ein die Saugleitung mit (mindestens) einer Brennkammer der Verbrennungskraftmaschine fluidtechnisch verbindendes Einlassventil und mindestens ein die Brennkammer mit einem ersten Abschnitt der Abgasleitung fluidtechnisch verbindendes Auslassventil auf. Die Abgasleitung weist zwischen der Brennkammer und dem Abgasturbolader den ersten Abschnitt und stromabwärts des Abgasturboladers einen zweiten Abschnitt auf. Eine für das Abgas durchströmbare Gesamtquerschnittsfläche zwischen dem ersten Abschnitt und dem zweiten Abschnitt ist verstellbar. Das kann zum einen über einen den ersten Abschnitt mit dem zweiten Abschnitt verbindenden und den Abgasturbolader umgehenden Bypass (Wastegate) erfolgen, dessen Durchströmung regelbar ist und/oder über einen verstellbaren Abgasturbolader, der (wie der Bypass) zwischen einer ersten Stellung, die einen geringsten Durchströmungsquerschnitt für ein Abgas aufweist und einer zweiten Stellung, die einen größten Durchströmungsquerschnitt für das Abgas aufweist, (z. B. stufenlos oder in konkreten Schritten) verstellbar ist. In Verbindung mit dem Bypass kann insbesondere ein nicht verstellbarer Abgasturbolader eingesetzt werden, so dass die durchströmbare Gesamtquerschnittsfläche dann über den Bypass geregelt wird. Das Verfahren umfasst zumindest die folgenden Schritte:
a) Erfassen einer Lastanforderung für den Antriebsstrang;
b) Bestimmen einer Stellung des Abgasturboladers und/oder des Bypasses zur Bereitstellung einer Turbinenleistung des Abgasturboladers.
In Schritt b) wird ein Öffnungszeitpunkt des mindestens einen Einlassventils und ein Schließzeitpunkt des mindestens einen Auslassventils berücksichtigt.

Moderne Verbrennungskraftmaschinen werden immer höher aufgeladen bei gleichzeitig verringerten Hubvolumen (sog. *"downsizing*"). Bei dynamischen Wechseln von Betriebspunkten der Verbrennungskraftmaschine ist ein Aufbau von Drehmomenten insbesondere von dem Zusammenspiel einer Regelung von Drosselklappe, Nockenwelle und Ladedruck abhängig. Bei den aktuellen Ottomotoren einzelner Hersteller werden zunehmend Verbrennungskraftmaschinen mit VTG-Abgasturboladern entwickelt, die unter anderem zur Schadstoffreduzierung (z. B. Stickoxidemission) mit dem sogenannten Miller-Brennverfahren betrieben werden. Bei diesem Brennverfahren wird ein Einlassventil einer Brennkammer z. B. schon während des Ansaugtaktes geschlossen, so dass die Zylinderfüllung verringert wird. Dadurch werden Temperatur und Druck am Ende des Verdichtungstaktes verringert. Durch den Abgasturbolader kann zusätzlich Gemisch in die Brennkammer eingeführt werden, so dass Verluste und geringere Leistung gegenüber herkömmlichen Verbrennungskraftmaschinen ausgeglichen werden können. Weiter treten bei der Ventilsteuerung Überschneidungen auf, das heißt Einlassventil und Auslassventil einer Brennkammer sind zumindest zeitweise gleichzeitig zumindest teilweise geöffnet, so dass die Saugleitung mit der Abgasleitung über die Brennkammer fluidtechnisch verbunden ist.

Bei Brennverfahren, die mit einer derartigen oder anderen Betätigung der Einlass- bzw. Auslassventile arbeiten, ist eine im Zylinder verbleibende Frischluftfüllung aufgrund der hohen Ventilüberschneidung (also zeitliche Überschneidung des Öffnungszeitpunkts eines Einlassventils und eines Schließzeitpunkts eines Auslassventils einer Brennkammer; d. h. die Saugleitung ist während der Überschneidung fluidtechnisch mit der Abgasleitung - dem ersten Abschnitt - über die Brennkammer verbunden) sowohl von einem dritten Druck in der Saugleitung als auch von einem ersten Druck im ersten Abschnitt der Abgasleitung abhängig. Weiter nimmt durch die Verwendung von VTG-Abgasturboladern die mögliche Varianz der Drücke stark zu. Insbesondere wird durch den Abgasturbolader sowohl der dritte Druck im Saugrohr als auch der erste Druck im ersten Abschnitt beeinflusst.

Zudem werden bei modernen Verbrennungskraftmaschinen Nockenwellensteller gezielt zur Reduzierung eines Kraftstoffverbrauchs als auch zur Regelung der Frischluftfüllung der Brennkammer eingesetzt. Dabei wird die Sensitivität einer Zylinderfüllung (also der Füllung der Brennkammer) durch den dritten Druck in der Saugleitung und durch den ersten Druck im ersten Abschnitt der Abgasleitung infolge der unterschiedlichen Nockenwellenpositionen (und der damit verbundenen Änderungen der Betätigung der Einlass- und Auslassventile) stark beeinflusst.

Es ist nun festgestellt worden, dass heutige Ladedruckregelungsfunktionen die unterschiedlichen Sensitivitäten der Zylinderfüllung nicht oder nicht ausreichend berücksichtigen können, so ein nur noch verlangsamter und/oder unharmonischer Ladedruck- und Drehmomentaufbau realisiert werden kann. Insbesondere werden die Nockenwellenpositionen, also die Öffnungszeit eines Einlassventils und die Schließzeit eines Auslassventils (und die daraus resultierende zeitliche Überschneidung, in der beide Ventile in einer geöffneten Stellung angeordnet sind und die Saugleitung mit dem ersten Abschnitt der Abgasleitung über die Brennkammer fluidtechnisch verbunden ist), bisher nicht berücksichtigt.

Vorliegend wird insbesondere vorgeschlagen, im Rahmen des Verfahrens zur Ladedruckregelung eine Nockenwellenposition bzw. die Stellung mindestens eines Einlassventils und mindestens eines Auslassventils einer (gemeinsamen) Brennkammer zu berücksichtigen.

Insbesondere ist die Verbrennungskraftmaschine ein Ottomotor, alternativ ein Dieselmotor. Über die Saugleitung kann der Brennkammer zumindest Frischluft zugeführt werden. Die Saugleitung ist über das mindestens eine Einlassventil mit der Brennkammer fluidtechnisch verbindbar oder davon trennbar. Die Abgasleitung ist über das mindestens eine Auslassventil mit der Brennkammer fluidtechnisch verbindbar oder davon trennbar.

Der Abgasturbolader ist insbesondere zwischen einer ersten Stellung, die einen geringsten Durchströmungsquerschnitt für ein Abgas aufweist und einer zweiten Stellung, die einen größten Durchströmungsquerschnitt für das Abgas aufweist, (z. B. stufenlos oder in konkreten Schritten) über mehrere (Zwischen-)Stellungen verstellbar. In der ersten Stellung kann ein hohes Druckverhältnis zwischen erstem Druck (in der Abgasleitung stromaufwärts des Abgasturboladers) und zweitem Druck (in der Abgasleitung stromabwärts des Abgasturboladers) realisiert werden, in der zweiten Stellung entsprechend nur ein geringeres Druckverhältnis.

Alternativ ist der Abgasturbolader nicht verstellbar ausgeführt. In diesem Fall ist ein regelbarer Bypass vorgesehen, durch den das Abgas unter Umgehung des Abgasturboladers von dem ersten Abschnitt in den zweiten Abschnitt geleitet werden kann. Durch die Veränderung der durchströmbaren Querschnittsfläche des Bypasses kann die Turbinenleistung des Abgasturboladers geregelt werden. Der Bypass ist wie der verstellbare Abgasturbolader insbesondere zwischen einer ersten Stellung, die einen geringsten Durchströmungsquerschnitt für ein Abgas aufweist und einer zweiten Stellung, die einen größten Durchströmungsquerschnitt für das Abgas aufweist, (z. B. stufenlos oder in konkreten Schritten) über mehrere (Zwischen-)Stellungen verstellbar. In der ersten Stellung kann ein hohes Druckverhältnis zwischen erstem Druck (in der Abgasleitung stromaufwärts des Abgasturboladers) und zweitem Druck (in der Abgasleitung stromabwärts des Abgasturboladers) realisiert werden, in der zweiten Stellung entsprechend nur ein geringeres Druckverhältnis.

Gemäß einer weiteren Ausgestaltung ist ein Bypass vorgesehen und der Abgasturbolader in der beschriebenen Weise verstellbar.

In jeder der beschriebenen Ausführungsarten wird eine durchströmbare Gesamtquerschnittsfläche (von Bypass und/oder Abgasturbolader) verstellt.

Insbesondere tritt bei einem Betrieb der Verbrennungskraftmaschine eine zeitliche Überschneidung des Öffnungszeitpunkts und des Schließzeitpunkts auf, so dass zumindest zeitweise der erste Abschnitt über die Brennkammer mit der Saugleitung fluidtechnisch verbunden ist.

Insbesondere kann die zeitliche Überschneidung auch durch einen Winkelbereich zwischen den Positionen einer Kurbelwelle oder von mindestens einer Nockenwelle beschrieben werden, bei denen eine Betätigung des Einlassventils und eine Betätigung des Auslassventils erfolgt.

Die Berücksichtigung der Betätigung der Einlass- und Auslassventile ermöglicht, dass die Zylinderfüllung, also die Zylinderluftmasse, genauer bestimmbar ist.

Damit kann insbesondere über die Drehzahl der Verbrennungskraftmaschine der Luftmassenstrom bzw. der Abgasmassenstrom bestimmt werden.

Die Turbinenleistung des Abgasturboladers ist insbesondere proportional zu einem Produkt von Abgasmassenstrom und einer Funktion eines Druckverhältnisses über den Abgasturbolader (also Verhältnis von erstem Druck und zweitem Druck).

Insbesondere wird in Schritt a) erfasst, dass eine Lastanforderung für den Antriebsstrang vorliegt oder geplant ist. Dies kann beispielsweise mittels mindestens einen Sensor gemessen oder mittels eines Rechenmodells ermittelt werden.

Eine (Änderung der) Lastanforderung kann die Auslösung des Schrittes b) des Verfahrens initiieren.

Insbesondere wird (bzw. werden) in Schritt b) zusätzlich zumindest einer (bevorzugt zumindest zwei oder sogar alle) der folgenden Parameter berücksichtigt: eine Zylinderluftmasse, eine Drehzahl der Verbrennungskraftmaschine, ein Luftmassenstrom (in der Saugleitung), ein Abgasmassenstrom (in der Abgasleitung), ein erster Druck im ersten Abschnitt der Abgasleitung, ein zweiter Druck im zweiten Abschnitt der Abgasleitung, ein dritter Druck in der Saugleitung, eine Temperatur des Abgases.

Insbesondere wird die in Schritt b) ermittelte Stellung des Abgasturboladers iterativ bestimmt.

Bevorzugt wird im Rahmen des iterativen Verfahrens ein Verlauf der Turbinenleistung zumindest in Abhängigkeit von einem ersten Druck im ersten Abschnitt bestimmt.

Insbesondere wird anhand des Verlaufs iterativ ein bestimmter erster Druck bestimmt, für den eine Turbinenleistung maximal ist.

Insbesondere wird der Verlauf ausgehend von der ersten Stellung (geringster Durchströmungsquerschnitt, also maximaler erzeugbarer Druckunterschied zwischen erstem Druck und zweitem Druck) und iterativ schrittweise hin zur zweiten Stellung ermittelt.

Bevorzugt wird eine Schrittweite der Iteration in Abhängigkeit von einer verfügbaren Rechenleistung einer Steuereinheit ausgewählt.

Bevorzugt wird die Schrittweite während des iterativen Verfahrens variiert. Insbesondere ist die Schrittweite größer, wenn die verfügbare Rechenleistung einer Steuereinheit geringer ist und umgekehrt ist die Schrittweite kleiner, wenn die verfügbare Rechenleistung einer Steuereinheit größer ist.

Ausgehend von dem z. B. im Rahmen der Iteration bestimmten ersten Druck, für den die Turbinenleistung maximal ist, kann danach eine Stellung des Abgasturboladers bzw. Einstellung der durchströmbaren Gesamtquerschnittsfläche von Bypass und Abgasturbolader bestimmt werden, bei der in Abhängigkeit von den dann vorliegenden Parametern die vorher bestimmte maximale Turbinenleistung erreichbar ist.

Insbesondere wird ausgehend von dem iterativ bestimmten Wert des ersten Druckes keine weitere Iteration durchgeführt, um die Stellung des Abgasturboladers bzw. Einstellung der durchströmbaren Gesamtquerschnittsfläche von Bypass und Abgasturbolader zu bestimmen, bei der in Abhängigkeit von den dann vorliegenden Parametern die vorher bestimmte maximale Turbinenleistung erreichbar ist.

Insbesondere wird das Verfahren nur durchgeführt, wenn ein Lastsprung vorliegt. Insbesondere wird das Verfahren nur durchgeführt, wenn der Lastsprung positiv ist, d. h., wenn ein angefordertes Drehmoment höher ist als ein vorliegendes Drehmoment.

Bevorzugt wird nur der Teil des Verfahrens neu berechnet, für den sich die betrachteten Parameter ändern.

Insbesondere werden bei dem Verfahren (nur oder mindestens) zwei unterschiedliche Situationen berücksichtigt. Die jeweilige Situation kann z. B. prognostiziert oder durch eine iterative Ermittlung eines Verlaufs der Turbinenleistung über dem ersten Druck in dem ersten Abschnitt der Abgasleitung bestimmt werden.

In der ersten Situation nimmt die Turbinenleistung ausgehend von der zweiten Stellung und hin zur ersten Stellung (des Abgasturboladers bzw. des Bypasses) kontinuierlich zu, so dass die Stellung des Abgasturboladers bzw. des Bypasses in die erste Stellung überführt werden kann.

In der zweiten Situation liegt (nur) ein Maximum des Verlaufs der Turbinenleistung über dem ersten Druck vor. Hier wird das Maximum der Turbinenleistung (iterativ, z. B. ausgehend von der ersten Stellung) bestimmt, so dass der bei dem Maximum vorliegende erste Druck für die Bestimmung der einzustellenden Stellung des verstellbaren Abgasturboladers verwendet werden kann.

Das Verfahren, insbesondere die (iterative) Bestimmung des Wertes des ersten Druckes, bei dem ein Maximum der Turbinenleistung vorliegt, erfolgt insbesondere ausschließlich rechnerisch in einer Steuereinheit. Insbesondere wird also keiner der Parameter auf den Antriebsstrang appliziert. Insbesondere wird erst nach Beendigung der Berechnung die dann ermittelte Stellung des Abgasturboladers möglichst schnell eingestellt, so dass mit der so erreichbaren maximalen Turbinenleistung ein Ladedruck- und/oder Drehmomentaufbau so schnell wie möglich erfolgen kann.

Weiter wird ein Kraftfahrzeug mit einem Antriebsstrang und einer Verbrennungskraftmaschine vorgeschlagen, wobei die Verbrennungskraftmaschine Bestandteil des Antriebsstranges ist. Der Antriebsstrang weist zumindest die Verbrennungskraftmaschine, eine Saugleitung, eine Abgasleitung und einen Abgasturbolader auf. Die Verbrennungskraftmaschine weist mindestens ein die Saugleitung mit (mindestens) einer Brennkammer der Verbrennungskraftmaschine fluidtechnisch verbindendes Einlassventil und mindestens ein die Brennkammer mit einem ersten Abschnitt der Abgasleitung fluidtechnisch verbindendes Auslassventil auf. Die Abgasleitung weist zwischen der Brennkammer und dem Abgasturbolader den ersten Abschnitt und stromabwärts des Abgasturboladers einen zweiten Abschnitt auf. Eine für das Abgas durchströmbare Gesamtquerschnittsfläche zwischen dem ersten Abschnitt und dem zweiten Abschnitt ist verstellbar. Das kann zum einen über einen den ersten Abschnitt mit dem zweiten Abschnitt verbindenden und den Abgasturbolader umgehenden Bypass (Wastegate) erfolgen, dessen Durchströmung regelbar ist und/oder über einen verstellbaren Abgasturbolader, der (wie der Bypass) zwischen einer ersten Stellung, die einen geringsten Durchströmungsquerschnitt für ein Abgas aufweist und einer zweiten Stellung, die einen größten Durchströmungsquerschnitt für das Abgas aufweist, (z. B. stufenlos oder in konkreten Schritten) verstellbar ist. Zusätzlich ist eine Steuereinheit vorgesehen, die zur Durchführung des beschriebenen Verfahrens geeignet ausgeführt bzw. eingerichtet ist und/oder die das Verfahren durchführt bzw. durchführen kann.

Insbesondere greift die Steuereinheit auf zumindest ein in der Steuereinheit hinterlegtes Modell zurück. Das mindestens eine Modell ist z. B. ein erstes Modell, durch das eine Zylinderluftfüllung in Abhängigkeit von Parametern bestimmbar ist, und/oder ein zweites Modell, durch das ein Abgasmassenstrom in Abhängigkeit von Parametern bestimmbar ist, und/oder ein drittes Modell, durch das eine Turbinenleistung des Abgasturboladers in Abhängigkeit von Parametern bestimmbar ist.

Insbesondere greift de Steuereinheit auf zwei der genannten Modelle zurück, wobei das eine der Modelle zur Regelung der Verbrennungskraftmaschine (also z. B. zur Regelung der Einlassventile, Auslassventile, Zündzeitpunkte, Gemischbildung) und das andere der Modelle zur Regelung des Abgasturboladers (z. B. zum Verändern der Turbinengeometrie oder des Bypasses, also zur Einstellung der Stellung) vorgesehen ist.

Weiter kann das Verfahren auch von einem Computer bzw. mit einem Prozessor einer Steuereinheit ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens ausführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte des vorgeschlagenen Verfahrens auszuführen.

Die Ausführungen zu dem Verfahren sind insbesondere auf das Kraftfahrzeug, das System, das Speichermedium oder das computerimplementierte Verfahren übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen
- Fig. 1:: ein Kraftfahrzeug 2 mit einem Antriebsstrang 1;
- Fig. 2:: einen ersten Ablaufplan;
- Fig. 3:: ein erstes Diagramm;
- Fig. 4:: einen zweiten Ablaufplan mit einem zweiten Diagramm;
- Fig. 5:: ein weiteres Kraftfahrzeug mit einem Antriebsstrang.

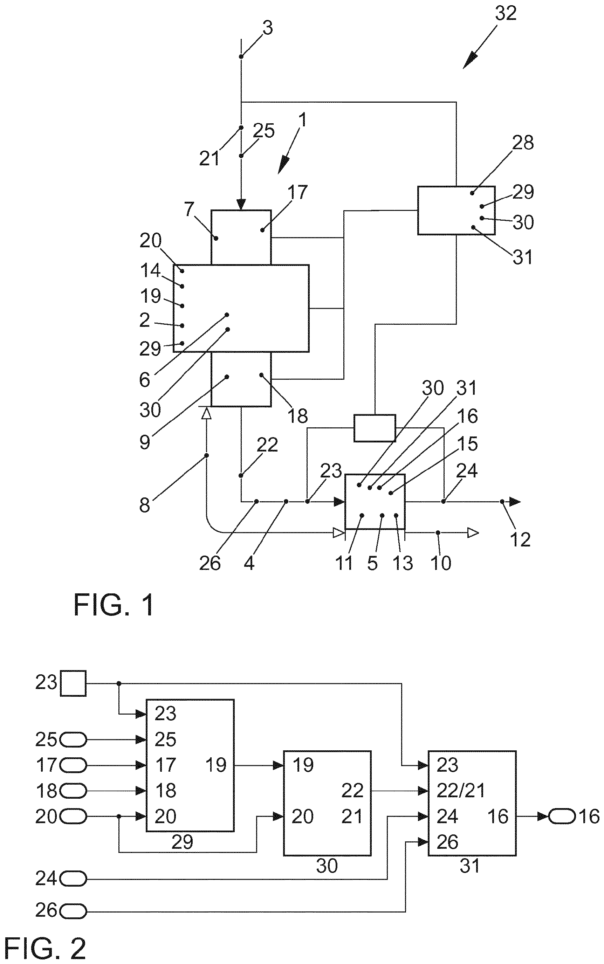

Fig. 1 zeigt ein Kraftfahrzeug 32 mit einem Antriebsstrang 2. Der Antriebsstrang 2 weist eine Verbrennungskraftmaschine 1, eine Saugleitung 3, eine Abgasleitung 4 und einen Abgasturbolader 5 auf. Die Verbrennungskraftmaschine 1 weist ein die Saugleitung 3 mit einer Brennkammer 6 der Verbrennungskraftmaschine 1 fluidtechnisch verbindendes Einlassventil 7 und ein die Brennkammer 6 mit einem ersten Abschnitt 8 der Abgasleitung 4 fluidtechnisch verbindendes Auslassventil 9 auf. Die Abgasleitung 4 weist zwischen der Brennkammer 6 und dem Abgasturbolader 5 den ersten Abschnitt 8 und stromabwärts des Abgasturboladers 5 einen zweiten Abschnitt 10 auf. Der Abgasturbolader 5 ist zwischen einer ersten Stellung 11, die einen geringsten Durchströmungsquerschnitt für ein Abgas 12 aufweist und einer zweiten Stellung 13, die einen größten Durchströmungsquerschnitt für das Abgas 12 aufweist, (z. B. stufenlos oder in konkreten Schritten) verstellbar. Zusätzlich ist eine Steuereinheit 28 vorgesehen, die zur Durchführung des beschriebenen Verfahrens geeignet ausgeführt ist bzw. die das Verfahren durchführt bzw. durchführen kann.

Die Steuereinheit 28 greift auf in der Steuereinheit 28 hinterlegte Modelle 29, 30, 31 zurück. Die Modelle 29, 30, 31 umfassen ein erstes Modell 29, durch das eine Zylinderluftfüllung (also eine Zylinderluftmasse 19) in Abhängigkeit von Parametern bestimmbar ist, ein zweites Modell 30, durch das ein Abgasmassenstrom 22 in Abhängigkeit von Parametern bestimmbar ist, und ein drittes Modell 31, durch das eine Turbinenleistung 16 des Abgasturboladers 5 in Abhängigkeit von Parametern bestimmbar ist.

Das erste Modell 29 ist zur Regelung der Verbrennungskraftmaschine 1 (also z. B. zur Regelung des Einlassventils 7, des Auslassventils 9, der Zündzeitpunkte, der Gemischbildung) und das dritte Modell 31 zur Regelung des Abgasturboladers 5 (z. B. zum Verändern der Turbinengeometrie, also zur Einstellung der Stellung 15) vorgesehen.

Im Rahmen des Schritt a) wird das Vorliegen einer Lastanforderung 14 für den Antriebsstrang 2 erkannt bzw. in Schritt a) liegt eine Lastanforderung 14 vor, die durch die Steuereinheit umzusetzen ist. In Schritt b) erfolgt ein Bestimmen einer Stellung 15 des Abgasturboladers 5 zur Bereitstellung einer möglichst hohen, also einer maximalen Turbinenleistung 16 des Abgasturboladers 5. Dabei wird in Schritt b) ein Öffnungszeitpunkt 17 des Einlassventils 7 und ein Schließzeitpunkt 18 des Auslassventils 9 berücksichtigt.

Bei dem Verfahren werden zusätzlich die folgenden Parameter berücksichtigt: eine Zylinderluftmasse 19 , eine Drehzahl 20 der Verbrennungskraftmaschine 1, ein Luftmassenstrom 21 (in der Saugleitung 3), ein Abgasmassenstrom 22 (in der Abgasleitung 4), ein erster Druck 23 im ersten Abschnitt 8 der Abgasleitung 4, ein zweiter Druck 24 im zweiten Abschnitt 10 der Abgasleitung 4, ein dritter Druck 25 in der Saugleitung 3, eine Temperatur 26 des Abgases 12.

Fig. 2 zeigt einen ersten Ablaufplan. Darin werden die Zusammenhänge der einzelnen Parameter, die das vorliegende Verfahren nutzt, dargestellt. Als Eingangsgrößen werden erster Druck 23 (Abgasgegendruck im ersten Abschnitt 8), dritter Druck 25 im Saugrohr 3, Öffnungszeitpunkt 17 des Einlassventils 7, Schließzeitpunkt 18 des Auslassventils 9, Drehzahl 20 der Verbrennungskraftmaschine 1, zweiter Druck 24 im zweiten Abschnitt 10 und Temperatur 26 des Abgases 12 verwendet.

Im Rahmen einer Iteration werden unterschiedliche Werte des ersten Drucks 23 als Eingangsgröße verwendet.

Die Parameter erster Druck 23, dritter Druck 25, Öffnungszeitpunkt 17 des Einlassventils 7, Schließzeitpunkt 18 des Auslassventils 9, Drehzahl 20 der Verbrennungskraftmaschine 1 werden als Eingangsgrößen für das erste Modell 29 zur Ermittlung der daraus resultierenden Zylinderluftmasse 19 verwendet.

Die im Rahmen der jeweiligen Iteration ermittelte Zylinderluftmasse 19 wird zusammen mit der Drehzahl 20 als Eingangsgröße für das zweite Modell 30 zur Ermittlung des daraus resultierenden Abgasmassenstroms 22 (bzw. des damit korrespondierenden Luftmassenstroms 21) verwendet.

Der im Rahmen der jeweiligen Iteration ermittelte Abgasmassenstrom 22 wird zusammen mit dem für die jeweilige Iteration genutzten Wert des ersten Drucks 23, dem zweiten Druck 24 und der Temperatur 26 des Abgases 12 als Eingangsgröße für das dritte Modell 31 zur Ermittlung der daraus resultierenden Turbinenleistung 16 verwendet.

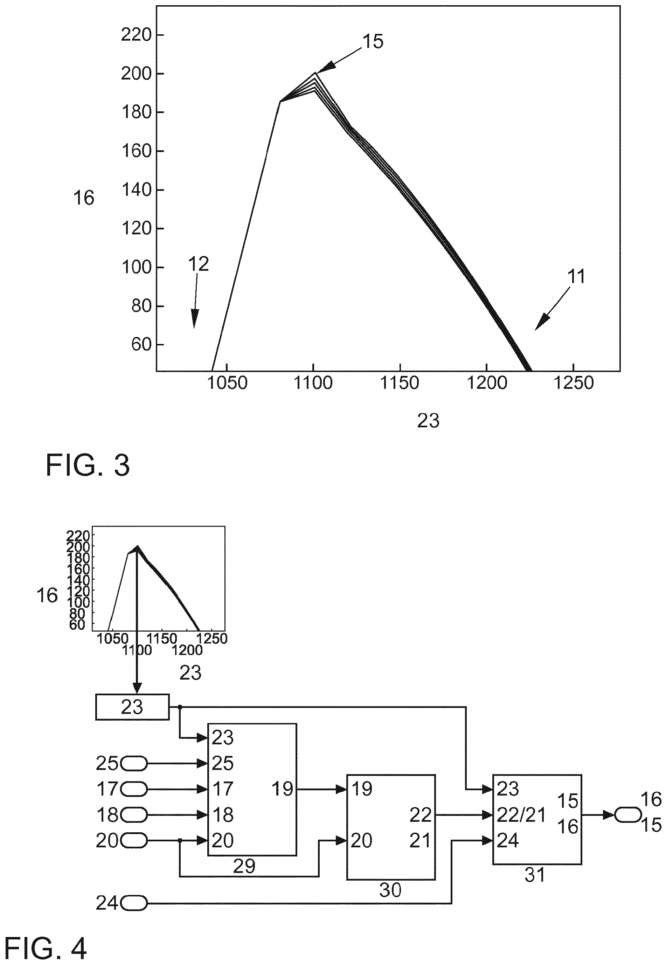

Infolge der Iteration kann ein Verlauf 27 der Turbinenleistung 16 über den verschiedenen Werten des ersten Drucks 23 (rechnerisch) bestimmt werden (siehe Fig. 3).

Die Iteration wird insbesondere ausschließlich rechnerisch durchgeführt, d. h. keiner der im Rahmen der Iteration verwendeten Parameter wird tatsächlich im Antriebsstrang 2 eingestellt.

Fig. 3 zeigt ein erstes Diagramm, wobei auf der horizontalen Achse der erste Druck 23 und auf der vertikalen Achse die Turbinenleistung aufgetragen ist. Fig. 3 zeigt den im Rahmen des Verfahrens bzw. im Rahmen einer Iteration bestimmten Verlauf 27 der Turbinenleistung 16 über den verschiedenen Werten des ersten Drucks 23. Hier liegt ein Maximum in dem Verlauf 27 vor, so dass offensichtlich die beschriebene zweite Situation vorliegt.

Die im Hinblick auf Fig. 2 erläuterte Iteration erfolgt ausgehend von einer ersten Stellung 11 des Abgasturboladers 5 (geringster Durchströmungsquerschnitt, also maximaler erzeugbarer Druckunterschied zwischen erstem Druck 23 und zweitem Druck 24) und iterativ schrittweise hin zur zweiten Stellung 12.

Fig. 4 zeigt einen zweiten Ablaufplan mit einem zweiten Diagramm. Für den zweiten Ablaufplan wird der Wert des ersten Druckes 23 als Eingangsgröße verwendet, für den durch den ersten Ablaufplan gemäß Fig. 1 eine maximale Turbinenleistung 16 vorliegt.

Als Eingangsgrößen werden also der erste Druck 23 (Abgasgegendruck im ersten Abschnitt 8, für den ein Maximum der Turbinenleistung 16 im vorliegenden Betriebspunkt ermittelt wurde), dritter Druck 25 im Saugrohr 3, Öffnungszeitpunkt 17 des Einlassventils 7, Schließzeitpunkt 18 des Auslassventils 9, Drehzahl 20 der Verbrennungskraftmaschine 1 sowie zweiter Druck 24 im zweiten Abschnitt 10 verwendet.

Die Parameter erster Druck 23 (mit dem Wert, für den das Maximum der Turbinenleistung 16 im vorliegenden Betriebspunkt ermittelt wurde), dritter Druck 25, Öffnungszeitpunkt 17 des Einlassventils 7, Schließzeitpunkt 18 des Auslassventils 9, Drehzahl 20 der Verbrennungskraftmaschine 1 werden als Eingangsgrößen für das erste Modell 29 zur Ermittlung der daraus resultierenden Zylinderluftmasse 19 verwendet.

Die so ermittelte Zylinderluftmasse 19 wird zusammen mit der Drehzahl 20 als Eingangsgröße für das zweite Modell 30 zur Ermittlung des daraus resultierenden Abgasmassenstroms 22 (bzw. des damit korrespondierenden Luftmassenstroms 21) verwendet.

Der so ermittelte Abgasmassenstrom 22 wird zusammen mit dem hier genutzten Wert des ersten Drucks 23 und dem zweiten Druck 24 als Eingangsgröße für das dritte Modell 31 zur Ermittlung der zur Erzeugung der maximalen Turbinenleistung 16 erforderlichen Stellung 15 des Abgasturboladers 5 verwendet.

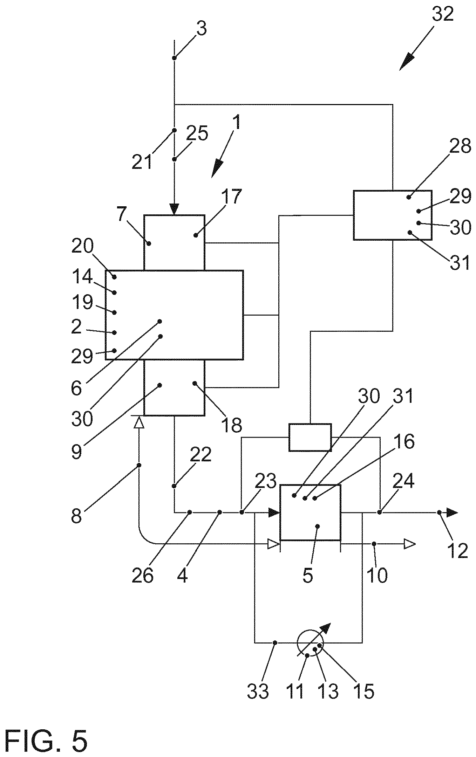

Fig. 5 zeigt ein weiteres Kraftfahrzeug 2 mit einem Antriebsstrang 1. Auf die Ausführungen zu Fig. 1 wird Bezug genommen. Hier weist der Antriebsstrang 2 einen den Abgasturbolader 5 umgehenden Bypass 33 auf, der den ersten Abschnitt 8 mit dem zweiten Abschnitt 10 regelbar verbindet. Der Bypass 33 (bzw. der Durchströmungsquerschnitt des Bypasses 33 und/oder die Gesamtquerschnittsfläche von Bypass 33 und Abgasturbolader 5) ist zwischen einer ersten Stellung 11, die einen geringsten Durchströmungsquerschnitt für ein Abgas 12 aufweist und einer zweiten Stellung 13, die einen größten Durchströmungsquerschnitt für das Abgas 12 aufweist, (z. B. stufenlos oder in konkreten Schritten) verstellbar.

### Bezugszeichenliste

- 1: Verbrennungskraftmaschine
- 2: Antriebsstrang
- 3: Saugleitung
- 4: Abgasleitung
- 5: Abgasturbolader
- 6: Brennkammer
- 7: Einlassventil
- 8: erster Abschnitt
- 9: Auslassventil
- 10: zweiter Abschnitt
- 11: erste Stellung
- 12: Abgas
- 13: zweite Stellung
- 14: Lastanforderung
- 15: Stellung
- 16: Turbinenleistung
- 17: Öffnungszeitpunkt
- 18: Schließzeitpunkt
- 19: Zylinderluftmasse
- 20: Drehzahl
- 21: Luftmassenstrom
- 22: Abgasmassenstrom
- 23: erster Druck (Abgasgegendruck)
- 24: zweiter Druck (stromabwärts der Turbine)
- 25: dritter Druck
- 26: Temperatur
- 27: Verlauf
- 28: Steuereinheit
- 29: erstes Modell (Zylinderluftfüllung)
- 30: zweites Modell (Abgasmassenstrom)
- 31: drittes Modell (Turbinenleistung)
- 32: Kraftfahrzeug
- 33: Bypass

## Patentansprüche

1. Verfahren zur Ladedruckregelung einer Verbrennungskraftmaschine (1), die Bestandteil eines Antriebsstranges (2) ist, wobei der Antriebsstrang (2) zumindest die Verbrennungskraftmaschine (1), eine Saugleitung (3), eine Abgasleitung (4) und einen Abgasturbolader (5) aufweist; wobei die Verbrennungskraftmaschine (1) mindestens ein die Saugleitung (3) mit einer Brennkammer (6) der Verbrennungskraftmaschine (1) fluidtechnisch verbindendes Einlassventil (7) und mindestens ein die Brennkammer (6) mit einem ersten Abschnitt (8) der Abgasleitung (4) fluidtechnisch verbindendes Auslassventil (9) aufweist; wobei die Abgasleitung (4) zwischen der Brennkammer (6) und dem Abgasturbolader (5) den ersten Abschnitt (8) und stromabwärts des Abgasturboladers (5) einen zweiten Abschnitt (10) aufweist; wobei eine für ein Abgas (12) durchströmbare Gesamtquerschnittsfläche zwischen dem ersten Abschnitt (8) und dem zweiten Abschnitt (10) durch einen verstellbaren Bypass (33) und/oder einen verstellbaren Abgasturbolader (5) zwischen einer ersten Stellung (11), die einen geringsten Durchströmungsquerschnitt für ein Abgas (12) aufweist und einer zweiten Stellung (13), die einen größten Durchströmungsquerschnitt für das Abgas (12) aufweist, verstellbar ist; wobei das Verfahren zumindest die folgenden Schritte umfasst:
a) Erfassen einer Lastanforderung (14) für den Antriebsstrang (2);
b) Bestimmen einer Stellung (15) des Abgasturboladers (5) und/oder des Bypasses (33) zur Bereitstellung einer Turbinenleistung (16) des Abgasturboladers (5);
wobei in Schritt b) ein Öffnungszeitpunkt (17) des mindestens einen Einlassventils (7) und ein Schließzeitpunkt (18) des mindestens einen Auslassventils (9) berücksichtigt wird.

2. Verfahren nach Patentanspruch 1, wobei bei einem Betrieb der Verbrennungskraftmaschine (1) eine zeitliche Überschneidung des Öffnungszeitpunkts (17) und des Schließzeitpunkts (18) auftritt, so dass zumindest zeitweise der erste Abschnitt (8) über die Brennkammer (6) mit der Saugleitung (3) fluidtechnisch verbunden ist.

3. Verfahren nach einem der vorhergehenden Patentansprüche, wobei in Schritt b) zusätzlich zumindest einer der folgenden Parameter berücksichtigt wird: eine Zylinderluftmasse (19), eine Drehzahl (20) der Verbrennungskraftmaschine (1), ein Luftmassenstrom (21), ein Abgasmassenstrom (22), ein erster Druck (23) im ersten Abschnitt (8), ein zweiter Druck (24) im zweiten Abschnitt (10), ein dritter Druck (25) in der Saugleitung (3), eine Temperatur (26) des Abgases (12).

4. Verfahren nach einem der vorhergehenden Patentansprüche, wobei die in Schritt b) ermittelte Stellung (15) iterativ bestimmt wird.

5. Verfahren nach Patentanspruch 4, wobei im Rahmen des iterativen Verfahrens ein Verlauf (27) der Turbinenleistung (16) zumindest in Abhängigkeit von einem ersten Druck (23) im ersten Abschnitt (8) bestimmt wird.

6. Verfahren nach Patentanspruch 5, wobei anhand des Verlaufs (27) iterativ ein bestimmter erster Druck (23) bestimmt wird, für den eine Turbinenleistung (16) maximal ist.

7. Verfahren nach einem der vorhergehenden Patentansprüche 5 und 6, wobei der Verlauf (27) ausgehend von der ersten Stellung (11) und iterativ schrittweise hin zur zweiten Stellung (13) ermittelt wird.

8. Verfahren nach einem der vorhergehenden Patentansprüche 4 bis 7, wobei eine Schrittweite der Iteration in Abhängigkeit von einer verfügbaren Rechenleistung einer Steuereinheit (28) ausgewählt wird.

9. Verfahren nach Patentanspruch 8, wobei die Schrittweite während des Verfahrens variiert wird.

10. Verfahren nach einem der vorhergehenden Patentansprüche, wobei das Verfahren nur durchgeführt wird, wenn ein Lastsprung vorliegt.

11. Kraftfahrzeug (32) mit einem Antriebsstrang (2), der zumindest eine Verbrennungskraftmaschine (1), eine Saugleitung (3), eine Abgasleitung (4) und einen Abgasturbolader (5) aufweist, wobei weiter die Verbrennungskraftmaschine (1) mindestens ein die Saugleitung (3) mit mindestens einer Brennkammer (6) der Verbrennungskraftmaschine (1) fluidtechnisch verbindendes Einlassventil (7) und mindestens ein die Brennkammer (6) mit einem ersten Abschnitt (8) der Abgasleitung (4) fluidtechnisch verbindendes Auslassventil (9) aufweist; und weiter die Abgasleitung (4) zwischen der Brennkammer (6) und dem Abgasturbolader (5) den ersten Abschnitt (8) und stromabwärts des Abgasturboladers (5) einen zweiten Abschnitt (10) ausbildet; wobei eine für ein Abgas (12) durchströmbare Gesamtquerschnittsfläche zwischen dem ersten Abschnitt (8) und dem zweiten Abschnitt (10) durch einen verstellbaren Bypass (33) und/oder einen verstellbaren Abgasturbolader (5) zwischen einer ersten Stellung (11), die einen geringsten Durchströmungsquerschnitt für ein Abgas (12) bereitstellt, und einer zweiten Stellung (13), die einen größten Durchströmungsquerschnitt für das Abgas (12) bereitstellt, verstellbar ist, wobei weiter mindestens eine Steuereinheit (28) vorgesehen ist, die zur Durchführung eines Verfahrens nach einem der vorhergehenden Patentansprüche eingerichtet ist.
